# FASCICULE DE BREVET EUROPEEN

(11) **EP 4 161 790 B1**
(45) Date de publication et mention de la délivrance du brevet: **17.12.2025**
(21) Numéro de dépôt: 21731105.9
(22) Date de dépôt: 03.06.2021
(51) Int. Cl.: B60H 1/00, B60H 1/32, F25B 5/02, F25B 5/04

(54) **PROCÉDÉ DE CONTRÔLE D'UNE BOUCLE DE THERMOREGULATION, NOTAMMENT POUR VÉHICULE AUTOMOBILE**
VERFAHREN ZUR STEUERUNG EINER THERMOREGELUNGSSCHLEIFE, INSBESONDERE FÜR EIN KRAFTFAHRZEUG
METHOD OF CONTROLLING A THERMOREGULATION LOOP, IN PARTICULAR FOR A MOTOR VEHICLE

(30) Priorité: 08.06.2020 FR 2005979
(43) Date de publication de la demande: 12.04.2023
(73) Titulaire: VALEO SYSTEMES THERMIQUES, 78320 Le Mesnil Saint-Denis (FR)
(72) Inventeur: BEAUVIS, Régis, 78322 Le Mesnil-Saint-Denis Cedex (FR); LIU, Jinming, 78322 Le Mesnil-Saint-Denis Cedex (FR)
(74) Mandataire: Valeo Powertrain Systems
(86) Numéro de dépôt international: PCT/EP2021/064908
(87) Numéro de publication internationale: WO 2021/249860

(56) Documents cités:
- DE-A1- 102015 218 825
- US-A1- 2017 317 393
- US-A1- 2018 215 231
- US-A1- 2018 281 564

## Description

L'invention concerne un procédé de contrôle d'une boucle de thermorégulation, notamment pour véhicule automobile. Un procédé de contrôle d'une boucle de thermorégulation d'un type connu est divulgué par le document US 2018/281564 A1.

Les véhicules automobiles sont couramment équipés d'un circuit de régulation thermique comprenant une boucle de circulation de fluide réfrigérant utilisé pour chauffer ou refroidir différentes zones ou différents composants du véhicule. Il est notamment connu d'utiliser ce circuit pour traiter thermiquement, d'une part, un flux d'air envoyé dans l'habitacle du véhicule et, d'autre part, une batterie ou d'autres composants électriques dudit véhicule.

Dans un tel cas de figure, il est connu des circuits comprenant deux branches, l'une pour la thermo régulation du flux d'air et l'autre pour la thermo régulation de la batterie.

Le circuit est contrôlé à partir de différents paramètres qui permettent tout en limitant la consommation d'énergie à fournir à un compresseur du circuit d'optimiser la thermorégulation aussi bien lorsqu'une seule des deux branches fonctionne comme lorsque les deux branches fonctionnent à la fois.

Cependant, il a été constaté par le déposant que les stratégies de contrôle employées ne sont pas totalement satisfaisantes. En effet, lorsque le circuit doit passer d'une configuration où seulement l'une des branches fonctionne à une configuration où les deux branches fonctionnent alors la régulation thermique présente un temps de réponse trop long. A titre d'exemple, lorsque l'on passe d'une configuration où seule la branche de thermo régulation du flux d'air fonctionne, en particulier en mode climatisation, à une configuration où les deux branches fonctionnent, cela provoque une augmentation rapide de plusieurs degrés dans l'habitacle, ce qui est ressenti par les passagers avant que la stratégie de contrôle ne permette de baisser la température pour la faire tendre vers une valeur plus faible minimisant le ressenti. Des phénomènes équivalents s'observent dans les autres changements de configuration, à savoir quand l'on passe d'une configuration où seule la branche de thermo régulation de la batterie fonctionne à une configuration où les deux branches fonctionnent, ou quand l'on passe d'une configuration où les deux branches fonctionnent à une configuration où seule la branche de thermo régulation du flux d'air ou la branche de thermo régulation de la batterie fonctionne.

L'invention a pour objet de pallier au moins en partie les inconvénients précités et propose à cette fin un procédé de contrôle d'une boucle de thermorégulation parcourue par un fluide réfrigérant, notamment une boucle de thermorégulation d'un véhicule automobile, ladite boucle comprenant au moins une première et une deuxième branche de circulation du fluide, ledit procédé étant configuré pour faire passer la boucle d'un premier état dans lequel le fluide circule dans l'une seulement desdites branches à un deuxième état dans lequel le fluide circule simultanément dans lesdites branches, et réciproquement, ledit procédé comprenant une étape de contrôle d'un écoulement du fluide dans l'une et/ou l'autre des branches selon une première stratégie de contrôle lors d'un fonctionnement dans un mode permanent du premier ou du deuxième état et une étape de modification de l'écoulement du fluide selon une seconde stratégie de contrôle lors d'un passage de l'un des états à un autre des états de sorte à limiter un écart de température lors dudit passage, dans lequel la deuxième stratégie comprend un calcul d'une valeur de consigne par un ajout ou une soustraction d'une valeur de décalage à une valeur délivére par la première stratégie.

La mise en place d'une stratégie de contrôle spécifique, à savoir la seconde stratégie, lors d'un passage de l'un des états à l'autre permet de gérer les modes transitoires sans dépendre de la stratégie utilisée en mode permanent. Il est de la sorte possible d'obtenir un écoulement de fluide dans les branches qui permettent de maîtriser les écarts d'échange de chaleur et donc de température, en particulier dans la branche en fonctionnement à la fois avant et après le changement d'état.

Selon différentes caractéristiques qui pourront être prises séparément ou selon toutes combinaisons techniquement possibles, formant autant de mode de réalisation de l'invention :
- Les première et deuxième branches sont parallèles,
- La première branche comprend une branche de thermo régulation d'un flux d'air, notamment d'un flux d'air circulant à l'intérieur d'un habitacle du véhicule automobile,
- la deuxième branche comprend une branche de thermo régulation de composants électriques, notamment d'une batterie du véhicule,
- en cas de passage d'une première alternative du premier état dans lequel le fluide circule seulement dans la première branche au deuxième état, l'étape de modification comprend une étape de fermeture d'un premier détendeur de la première branche et/ou une étape d'accélération d'un compresseur de la boucle,
- en cas de passage d'une deuxième alternative du premier état dans lequel le fluide circule seulement dans la deuxième branche au deuxième état, l'étape de modification comprend une étape de fermeture d'un deuxième détendeur de la deuxième branche et/ou une étape d'accélération du compresseur de la boucle,
- en cas de passage du deuxième état à la première alternative du premier état, l'étape de modification comprend une étape d'ouverture du premier détendeur de la première branche et/ou une étape de ralentissement du compresseur de la boucle,
- en cas de passage du deuxième état à la deuxième alternative du premier état, l'étape de modification comprend étape d'ouverture du deuxième détendeur de la deuxième branche et/ou une étape de ralentissement du compresseur,
- ladite étape d'accélération du compresseur est effectuée en accélérant le compresseur d'au moins 20%, voire d'au moins 25%,
- ladite étape de ralentissement du compresseur est effectuée en ralentissant le compresseur d'au moins 20%, voire d'au moins 25%,
- ladite étape de fermeture du premier ou du deuxième détendeur est effectuée en fermant respectivement le premier ou le deuxième détendeur d'au moins 20%, voire d'au moins 30%,
- ladite étape d'ouverture du premier ou du deuxième détendeur est effectuée en ouvrant respectivement ledit premier ou ledit deuxième détendeur d'au moins 20%, voire d'au moins 30%,
- la première stratégie comprend la prise en compte de paramètres de contrôle parmi une température d'un flux d'air traversant un évaporateur de la première branche, une température d'un autre fluide traversant un refroidisseur de la deuxième branche permettant un échange de chaleur entre ledit autre fluide et le fluide réfrigérant, une température du fluide réfrigérant à l'entrée du compresseur et/ou une pression du fluide réfrigérant à l'entrée et/ou à la sortie du compresseur,
- le procédé comprend une étape d'ouverture ou de fermeture d'une vanne située sur la première branche et/ou la deuxième branche pour déclencher le passage de l'un des états à un autre des états
- ladite valeur de décalage est une constante,
- ladite valeur de décalage est une valeur dépendant de caractéristiques de la boucle,
- ladite valeur de décalage est fonction d'un ratio de puissance de refroidissement entre une puissance de refroidissement du refroidisseur et une puissance de refroidissement de l'évaporateur,
- ladite valeur de décalage est fonction d'une différence de température entre la température de l'autre fluide relevée à la sortie du refroidisseur et une température de consigne de ladite température
- une durée entre un déclenchement du passage de l'un des états à l'autre des états et une atteinte de la ou des valeurs de consigne issues du calcul relatif à la deuxième stratégie est inférieure à 20 secondes, voire à 10 secondes.

D'autres caractéristiques et avantages de l'invention apparaitront au cours de la lecture de la description détaillée qui va suivre pour la compréhension de laquelle on se reportera aux dessins annexés dans lesquels :
La figure 1 illustre de manière schématique un exemple de boucle de circulation avec laquelle le procédé de contrôle conforme à l'invention peut être mis en œuvre,
La figure 2 est un graphique illustrant la variation de différents paramètres de contrôle du fonctionnement de la boucle de la figure 1 ainsi que la variation associée de différentes grandeurs physiques associées, selon un exemple de mise en œuvre du procédé conforme à l'invention.

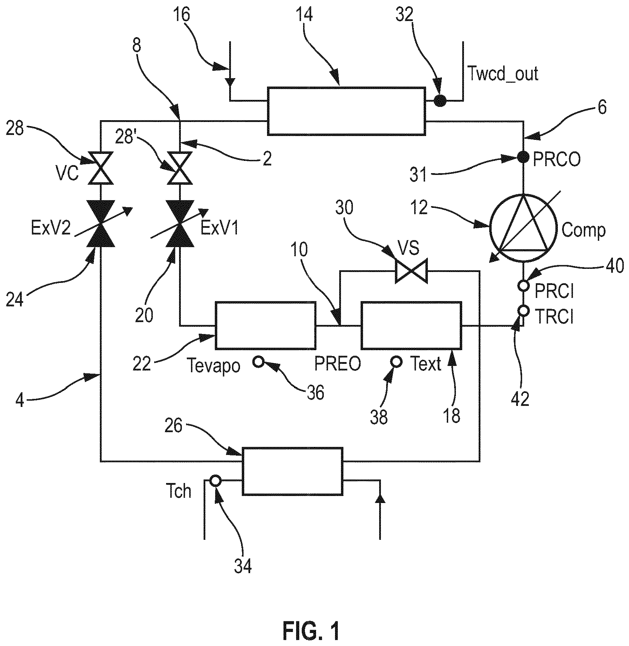

Comme illustré à la figure 1, l'invention s'applique à une boucle de thermorégulation parcouru par un fluide réfrigérant et concerne plus précisément un procédé de contrôle de ladite boucle. Il s'agit notamment d'une boucle de thermorégulation d'un véhicule automobile. Ladite boucle est en particulier configurée pour permettre la thermo régulation d'un flux d'air intérieur envoyé vers l'habitacle du véhicule et/ou la thermo régulation de composants électriques du véhicule tels qu'une batterie, ceci à partir d'un flux d'air extérieur et par échange de chaleur direct ou indirect avec ledit fluide réfrigérant. En cas d'échange de chaleur indirect, un fluide caloporteur est préférentiellement utilisé pour échanger de la chaleur avec le fluide réfrigérant, le flux d'air extérieur et/ou le flux d'air intérieur.

Les termes amont et aval employés dans la description qui suit se réfèrent au sens de circulation du fluide considéré, c'est-à-dire le fluide réfrigérant, le fluide caloporteur, le flux d'air extérieur et/ou le flux d'air intérieur.

Les dénominations « premier/ère », « deuxième », etc...utilisées dans la suite n'ont pas vocation à indiquer un niveau de hiérarchisation ou ordonnancer les termes qu'elles accompagnent. Ces dénominations permettent juste de distinguer les termes en question et peuvent être interverties sans que soit réduite la portée de l'invention.

Le fluide réfrigérant est par exemple un fluide susceptible de passer de phase liquide à gazeuse et réciproquement dans les conditions de température et de pression de la boucle de circulation du fluide réfrigérant. Il peut s'agir d'un fluide connu sous le nom de R134a ou d'un fluide connu sous le nom de R1234yf. Il pourra encore s'agir d'un fluide restant essentiellement à l'état gazeux comme le R744.

Le fluide caloporteur est par exemple un liquide, notamment de l'eau additionnée d'antigel tel que du glycol.

Ladite boucle comprenant au moins une première branche 2 et une deuxième branche 4 de circulation du fluide réfrigérant.

Préférentiellement, elle comprend en outre une branche principale 6 formant respectivement avec la première branche 2 ainsi qu'avec la deuxième branche 4 un circuit fermé. Autrement dit la première branche 2 et la deuxième branche 4 sont en parallèle l'une de l'autre. Elles sont ici entre un premier point de dérivation 8 de la branche principale 6 et un deuxième point de dérivation 10 de la branche principale 6.

Ladite branche principale 6 comprend, par exemple, un compresseur 12 et un échangeur bi-fluide 14.

Ledit échangeur bi fluide 14 est avantageusement configuré pour permettre un échange de chaleur entre le fluide réfrigérant et le fluide caloporteur. Ledit échangeur bi fluide est ici intégré dans une boucle 16 de circulation du fluide caloporteur, partiellement illustrée. Ledit échangeur bi-fluide est, par exemple, un condenseur permettant une condensation au moins partielle du fluide réfrigérant sortant du compresseur 12. Ledit échangeur bi-fluide est situé entre le compresseur 12 et le premier point de dérivation 8 dans la boucle de fluide réfrigérant.

Ladite branche principale comprend en outre ici un évaporateur-condenseur 18. Ledit évaporateur-condenseur 18 est configuré pour permettre un échange de chaleur entre le fluide réfrigérant et le flux d'air extérieur de sorte à faire subir au fluide réfrigérant un changement de phase, à savoir une condensation ou une évaporation, ceci en fonction du mode de fonctionnement de la boucle. Dans ladite boucle, ledit évaporateur-condenseur 18 est positionné en amont du compresseur 12, plus précisément entre le deuxième point de dérivation 10 et ledit compresseur 12. Ledit évaporateur-condenseur 18 est situé, par exemple, en face avant du véhicule de sorte à être parcouru par un flux d'air ayant préalablement traversé une calandre du véhicule.

Ladite première branche 2 est préférentiellement configurée pour permettre la thermo régulation du flux d'air intérieur. Elle comprend, par exemple, un premier détendeur électronique 20 et un évaporateur 22, positionnés dans cet ordre selon le sens de circulation du fluide réfrigérant.

Ledit premier détendeur électronique 20 est configuré pour présenter une ouverture de passage variable du fluide réfrigérant, ladite ouverture de passage étant contrôlable de façon électronique.

Ledit évaporateur 22 est configuré pour permettre un échange de chaleur entre le fluide réfrigérant et le flux d'air intérieur. Ledit évaporateur est situé, par exemple, dans un boîtier de chauffage, ventilation et conditionnement d'air dit aussi boîtier HVAC (selon l'acronyme « Heating, Ventilating and Air Conditioning » en anglais). Ledit boîtier est généralement situé sous une planche de bord du véhicule.

Ladite deuxième branche 4 est préférentiellement configurée pour permettre la thermo régulation d'une batterie. Elle comprend, par exemple, un deuxième détendeur électronique 24 et un refroidisseur 26, positionnés dans cet ordre selon le sens de circulation du fluide réfrigérant.

Comme le premier détendeur 20, ledit deuxième détendeur électronique 24 est configuré pour présenter une ouverture de passage variable du fluide réfrigérant, ladite ouverture de passage étant contrôlable de façon électronique.

Ledit refroidisseur 26 est configuré pour permettre un échange de chaleur entre le fluide réfrigérant et la batterie, de façon directe ou indirecte. Dans l'exemple illustré, il s'agit d'un refroidissement indirect, ledit refroidisseur 26 étant configuré pour permettre un échange de chaleur entre le fluide réfrigérant et le fluide caloporteur, un échange de chaleur étant organisé entre le fluide caloporteur et la batterie. Ledit refroidisseur 26 est éventuellement intégré dans la même boucle de circulation du fluide caloporteur que celle de l'échangeur bi-fluide 14. En variante, il est intégré dans une boucle de circulation du fluide caloporteur indépendante.

Ladite deuxième branche 4 comprend en outre ici une première vanne 28 et/ou une deuxième vanne 30. Il s'agit, notamment, de vannes tout ou rien qui sont configurées pour laisser passer le fluide réfrigérant sans pertes de charge ou avec très peu de pertes de charge, en position ouverte, et pour couper la circulation du fluide réfrigérant, en position fermée. La première vanne 28 est située entre le premier point de dérivation 8 et le deuxième détendeur électronique 24. La deuxième vanne 30 est située entre le refroidisseur 26 et le deuxième point de dérivation 10.

Dans le mode de réalisation illustré, la première branche 2 comprend également une vanne 28', notamment entre le premier point de dérivation 8 et le premier détendeur électronique 20. En variante, une autre vanne peut être située de façon complémentaire ou alternative entre le l'évaporateur 22 et le deuxième point de dérivation 10. Toujours en variante, ladite première branche 2 ne comprend de telles vannes.

Le premier détendeur 20 et/ou le deuxième détendeur 24 fonctionnent, par exemple, entre une ouverture nulle du détendeur à une ouverture partielle correspondant à l'ouverture la plus faible possible permettant d'avoir un effet de détente résiduelle très faible, voire nul. Entre ces deux positions, la détente subie par le fluide réfrigérant est fonction du degré d'ouverture du détendeur. Ledit degré d'ouverture est évalué, notamment, par un pas de commande, allant de 0 pour la position fermée à 5000 pour la position pleinement ouverte. La plage de fonctionnement est située, par exemple, entre 0 et 500 pas.

Pour favoriser le contrôle de la boucle de circulation du fluide réfrigérant, différents capteurs sont prévus. Dans l'exemple illustré, il s'agit d'un capteur 31 de pression du fluide réfrigérant en sortie du compresseur 12, d'un capteur 32 de température du liquide caloporteur en sortie de l'échangeur bi fluide 14, d'un capteur 36 de la température du flux d'air intérieur traversant l'évaporateur 22, d'un capteur 38 de la température du flux d'air extérieur traversant l'évaporateur condenseur 18, d'un capteur 34 de température du fluide caloporteur en sortie de refroidisseur 26, d'un capteur 40 de pression en entrée du compresseur 12 et/ou d'un capteur 42 de température en entrée dudit compresseur 12.

Ladite boucle est préférentiellement configurée pour fonctionner selon différents modes de thermo régulation du flux d'air intérieur et/ou différents mode de thermorégulation de la batterie. Les modes de thermorégulation du flux d'air intérieur comprennent, par exemple, un mode de climatisation de l'habitacle dans lequel le flux d'air intérieur est refroidi, un mode de pompe à chaleur dans lequel le flux d'air intérieur est réchauffé et/ou un mode de déshumidification dans lequel le flux d'air est refroidi puis réchauffé. D'autres modes de régulation thermique du flux d'air intérieur sont également possibles. Dans ces différents modes de thermorégulation du flux d'air intérieur, le fluide réfrigérant circule dans la première branche 2 bien qu'il soit également possible qu'il n'y ait pas de circulation de fluide réfrigérant dans ladite première branche 2. Les modes de thermorégulation de la batterie comprennent un mode de refroidissement de la batterie, un mode de chauffage de la batterie et/ou un mode sans chauffage ni refroidissement de la batterie. Dans ces différents modes de thermorégulation de la batterie, le fluide réfrigérant circule ou non dans ladite deuxième branche 4.

Pour permettre ces différents modes, avantageusement, la boucle de circulation du fluide caloporteur dans laquelle est intégré l'échangeur bi-fluide 14 comprend un premier échangeur de chaleur supplémentaire, non-illustré, par exemple situé en face avant du véhicule, à l'arrière de la calandre. Ledit premier échangeur de chaleur supplémentaire est configuré pour permettre un échange de chaleur entre le flux d'air extérieur et le fluide caloporteur. Il est situé, par exemple, en série avec le condenseur évaporateur 18 selon la circulation du flux d'air extérieur, en amont et/ou en aval. Il est utilisé, par exemple, en mode climatisation pour relâcher dans le flux d'air extérieur les calories dégagées par le fluide caloporteur au niveau de l'échangeur bi-fluide 14. Il pourra s'agir, par exemple, d'un radiateur de refroidissement.

Toujours avantageusement, ladite boucle de circulation du fluide caloporteur comprend encore un deuxième échangeur de chaleur supplémentaire, non illustré, configuré pour permettre un échange de chaleur entre le flux d'air intérieur et le liquide caloporteur. Ledit deuxième échangeur de chaleur supplémentaire est situé, par exemple, dans le boîtier HVAC, notamment en aval de l'évaporateur 22 selon le sens de circulation du flux d'air extérieur. Il est utilisé, par exemple en mode pompe à chaleur pour fournir au flux d'air intérieur les calories captées par le fluide caloporteur au niveau de l'échangeur bi-fluide 14. Il pourra s'agir, notamment d'un radiateur de chauffage et/ou aérotherme.

Selon différentes variantes non illustrées, pour permettre le plus grand nombre de modes de thermorégulation, ladite boucle de circulation du fluide réfrigérant comprend différentes branches supplémentaires à celles du mode de réalisation illustrée, lesdites branches étant parcourues ou non par le fluide réfrigérant en fonction des modes de thermorégulation choisis.

Ladite boucle de circulation du fluide caloporteur comprend avantageusement au moins une pompe d'entrainement du fluide. Selon différentes variantes non illustrées, pour permettre le plus grand nombre de modes de thermorégulation, elle comprend différentes branches empruntées ou non par la fluide caloporteur en fonction des modes de thermorégulation choisis.

Comme on l'aura compris, dans ce type d'application, en fonction des modes de thermorégulation choisis pour le fluide intérieur et/ou pour la batterie, le fluide réfrigérant circule soit uniquement dans la première branche 2, soit dans la deuxième branche 4 ou simultanément dans ces deux branches 2, 4. Autrement dit, on se trouve soit dans un premier état avec une circulation dans l'une seulement de ces branches 2, 4, soit dans un deuxième état avec une circulation simultanément dans ces deux branches 2, 4. Par ailleurs, en cas de changement des modes de thermorégulation, le passage de l'un des états à l'autre état peut alors être nécessaire.

Le procédé conforme à l'invention est ainsi configuré pour faire passer la boucle de circulation du fluide réfrigérant d'un premier état dans lequel le fluide circule dans l'une seulement desdites branches 2, 4 à un deuxième état dans lequel le fluide circule simultanément dans lesdites branches 2, 4, et réciproquement.

Cela étant, en dehors de ces moments de changement d'état, le procédé conforme à l'invention comprend une étape de contrôle d'un écoulement du fluide réfrigérant dans l'une et/ou l'autre des branches 2, 4 selon une première stratégie de contrôle. Il s'agit donc d'une stratégie de contrôle qui est exécutée lors d'un fonctionnement dans un mode permanent du premier ou du deuxième état, c'est-à-dire, lorsque la boucle de fluide réfrigérant reste dans le premier état ou dans le second état. Autrement dit, dans l'exemple illustré, que la boucle soit utilisée avec ou sans thermo régulation de la batterie et/ou avec ou sans thermo régulation du flux d'air intérieur, la première stratégie est exécutée tant que la boucle reste dans le premier état ou dans le deuxième état, même si les variables en jeu ne sont pas les mêmes d'un état à l'autre. Ladite première stratégie a notamment pour but de minimiser l'énergie à apporter au compresseur 12 pour assurer les modes de thermorégulation choisis.

Ladite première stratégie comprend avantageusement la prise en compte de paramètres de contrôle parmi la température du flux d'air traversant l'évaporateur 22, la température du fluide caloporteur à la sortie de l'échangeur bi-fluide 14, la température du fluide caloporteur à la sortie du refroidisseur 26, la température du fluide réfrigérant à l'entrée du compresseur 12 et/ou une pression du fluide réfrigérant à l'entrée et/ou la sortie du compresseur 12.

Ladite première stratégie permet de déterminer, notamment, une vitesse du compresseur 12 et/ou un degré d'ouverture du premier détendeur 20 et/ou du deuxième détendeur 24.

Cela étant, il a été constaté que si cette première stratégie est maintenue lors d'un passage de l'un des états à un autre des états, alors des écarts de température importants se produisent qui peuvent être ressentis par les occupants de l'habitacle. Ceci est le cas, par exemple, lorsque l'on passe du premier état au deuxième état dans le cas de figure où le premier état correspond à une circulation du fluide réfrigérant dans la première branche 2, en mode climatisation. Une explication est que la puissance du compresseur 12 est alors brusquement partagée entre la première branche 2 et la deuxième branche 4 et que les paramètres de contrôle de la première branche, en particulier la mesure de la température du flux d'air intérieur présente un temps de réponse relativement long, ceci notamment en raison de la technologie employée pour le capteur 36 associé. Il faut donc attendre le temps de réponse du capteur pour que le procédé de contrôle génère une réaction tendant à limiter l'écart de température, notamment en accélérant la vitesse de rotation du compresseur 12.

Pour éviter ceci, on pourrait utiliser des capteurs plus performants mais ils sont coûteux. Le procédé de contrôle conforme à l'invention propose au contraire une solution sans changement de capteur en mettant en œuvre une étape de modification de l'écoulement du fluide réfrigérant selon une seconde stratégie de contrôle lors du passage de l'un des états à un autre des états.

En cas de passage d'une première alternative du premier état dans lequel le fluide circule seulement dans la première branche 2 au deuxième état, l'étape de modification comprend étape de fermeture du détendeur 20 de la première branche 2 et/ou une étape d'accélération d'un compresseur 12 de la boucle,

En cas de passage d'une deuxième alternative du premier état dans lequel le fluide circule seulement dans la deuxième branche 4 au deuxième état, l'étape de modification comprend étape de fermeture du détendeur 24 de la deuxième branche 4 et/ou une étape d'accélération du compresseur 12.

En cas de passage du deuxième état à la première alternative du premier état, c'est-à-dire celle où le fluide réfrigérant circule uniquement dans la première branche 2, l'étape de modification comprend une étape d'ouverture du détendeur 20 de la première branche 2 et/ou une étape de ralentissement du compresseur 12.

En cas de passage du deuxième état à la deuxième alternative du premier état, c'est-à-dire celle où le fluide réfrigérant circule uniquement dans la deuxième branche 4, l'étape de modification comprend une étape d'ouverture du détendeur 24 de la deuxième branche 4 et/ou une étape de ralentissement du compresseur 12.

Dans ces différents cas de figure, ladite étape d'accélération du compresseur 12 est effectuée en accélérant le compresseur, par exemple, d'au moins 20%, voire d'au moins 25%. Ladite étape de ralentissement du compresseur 12 est effectuée en ralentissant le compresseur 12, par exemple, d'au moins 20%, voire d'au moins 25%.

Ladite étape de fermeture du premier ou du deuxième détendeur 20, 24 est effectuée en fermant le détendeur d'au moins 20%, voire d'au moins 30%. Ladite étape d'ouverture du premier ou du deuxième détendeur 20, 24 est effectuée en ouvrant ledit détendeur d'au moins 20%, voire d'au moins 30%.

Préférentiellement, le procédé comprend une étape d'ouverture ou de fermeture de la ou des vannes 28, 28' situées sur la première branche 2 et/ou la deuxième branche 4 pour déclencher le passage de l'un des états à un autre des états. Autrement dit, dans cette variante, c'est l'ordre d'ouverture et/ou de fermeture desdites vannes 28 28' qui détermine le basculement de la première à la deuxième stratégie.

La deuxième stratégie comprend, par exemple, un calcul d'une valeur de consigne par un ajout ou une soustraction d'une valeur de décalage à une valeur délivrée par la première stratégie, notamment un calcul d'une valeur de consigne de vitesse de rotation du compresseur 12 et/ou d'un degré d'ouverture du premier et/ou du deuxième détenteur 20, 24. Autrement dit, la valeur de consigne calculée selon la seconde stratégie pour la vitesse du compresseur 12 est égale à une valeur de consigne de ladite vitesse provenant de la première stratégie à laquelle est ajoutée ou soustraite une valeur de décalage. De même, la valeur de consigne calculée selon la seconde stratégie pour le degré d'ouverture du premier ou du second détendeur 20, 24 est égale à une valeur de consigne dudit degré d'ouverture provenant de la première stratégie à laquelle est ajoutée ou soustraite une valeur de décalage.

Selon un premier mode de réalisation, ladite valeur de décalage est une constante préétablie. En variante, il s'agit d'une valeur dépendant de caractéristiques de la boucle de fluide réfrigérant et/ou de la ou de l'une des boucles de fluide caloporteur.

Selon un autre mode de réalisation, applicable en particulier au degré d'ouverture du premier détendeur 20 et/ou du deuxième détendeur 24, ladite valeur de décalage est fonction d'un ratio de puissance de refroidissement entre la puissance de refroidissement du refroidisseur 26 et la puissance de refroidissement de l'évaporateur 22.

Selon un autre mode de réalisation, applicable en particulier à la vitesse de rotation du compresseur 12, ladite valeur de décalage est, par exemple, fonction d'une différence de température entre la température du fluide caloporteur relevée à la sortie du refroidisseur 26 et une température de consigne de ladite température. Ladite fonction est, notamment, une fonction affine tenant compte d'une constante préétablie et d'un coefficient. Ledit coefficient est choisi pour favoriser l'atteinte de la consigne de température du flux d'air intérieur, à l'aide de la première branche 2, ou du fluide caloporteur, à l'aide de la deuxième branche 4.

Une durée entre un déclenchement du passage de l'un des états à l'autre des états, c'est-à-dire, selon l'exemple illustré, entre l'ouverture ou la fermeture de la ou des vannes 28, 28' de l'une des branches 2, 4, et une atteinte des valeurs de consignes évoqués plus haut, à savoir les valeurs de consigne intégrant ledit décalage, est préférentiellement inférieure à 20 secondes, voire à 10 secondes. On entend par là que la loi de commande choisie pour atteindre lesdites valeurs de consigne est sélectionnée de sorte à atteindre ladite consigne en moins de 20 secondes, voire en moins de 10 secondes. Ceci permet un temps de réaction suffisamment long pour ne pas user prématurément les composants tout en étant suffisamment court pour limiter les écarts de température vis-à-vis de l'inertie du système.

Une fois cette valeur de consigne atteinte, la première stratégie de contrôle est avantageusement reprise.

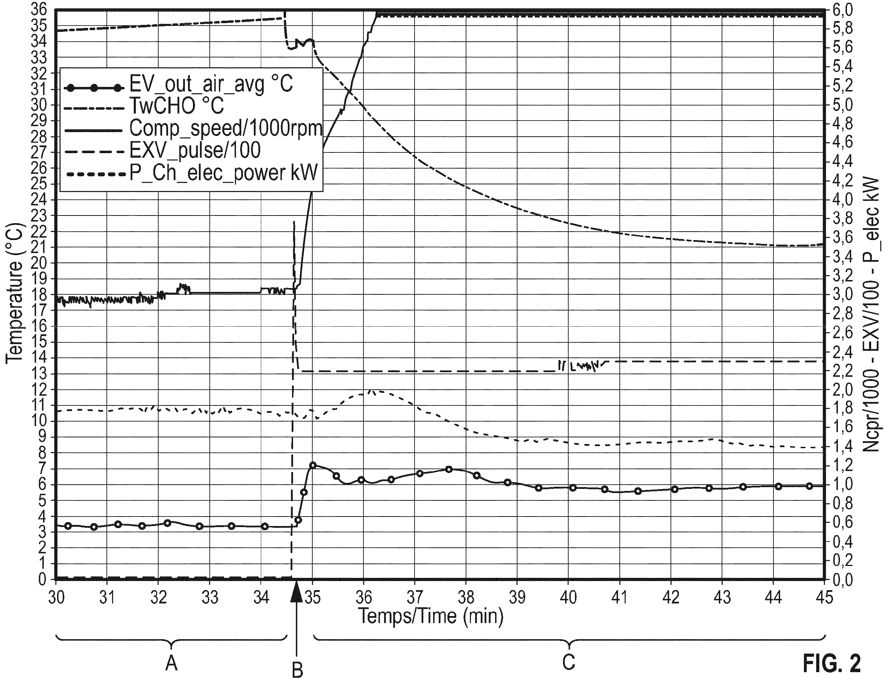

La figure 2 illustre un passage du premier état dans l'alternative où le fluide réfrigérant circule uniquement dans la première branche 2, en mode climatisation, au deuxième état.

L'axe des abscisses indique le temps, en minute. En ordonnée, différentes valeurs sont indiquées. Il s'agit de la température du fluide caloporteur en sortie du refroidisseur 26, en degré Celsius, courbe 50, de la vitesse de rotation du compresseur 12, en milliers de tours par minute, courbe 52, du degré d'ouverture du premier détendeur 20, en centaine de pas, courbe 54, de la température du flux d'air intérieur, en dégré Celsius, courbe 56, et de la puissance de dissipation du refroidisseur 26, en KW, courbe 58.

Dans la période illustrée A en abscisse, on se trouve dans le premier état dans l'alternative avec circulation du fluide réfrigérant uniquement dans la première branche 2, la boucle fonctionnant en mode climatisation.

La stratégie appliquée est la première stratégie. La température du flux d'air intérieur traversant l'évaporateur 22 est stable, entre 3 et 4° C ainsi que la vitesse de rotation du compresseur 12, aux environs de 3000 tours/minute, et le degré d'ouverture du premier détendeur 20, aux environs de 180 pas.

Parallèlement, le fluide réfrigérant ne circule pas dans la deuxième branche 4 et la puissance dissipation du refroidisseur est nulle.

Cependant, dans les conditions choisies pour le test, la température du fluide caloporteur en sortie du refroidisseur 26 augmente régulièrement et l'on atteint à un instant donné, situé dans une période repérée B, intervenant entre la trente quatrième et la trente cinquième minutes un seuil de température pour ledit fluide, ici une température située entre 35 et 36° C. A une telle température du fluide caloporteur, il devient nécessaire de refroidir la batterie.

Avantageusement, le procédé de contrôle conforme à l'invention détecte un tel franchissement de seuil et provoque le passage du premier état au deuxième état en ouvrant lesdites vannes 28, 28' de sorte que le fluide réfrigérant circule alors simultanément dans la première branche 2 et dans la deuxième branche 4, ceci pour assurer un refroidissement de la batterie tout en restant en mode climatisation.

Selon le procédé conforme à l'invention, la seconde stratégie est alors appliquée en ajoutant à la valeur de consigne de vitesse du compresseur un écart de plus de +1000 tours/minute, ceci en faisant en sorte que cette consigne soit atteinte en moins de 20 secondes. En complément, un écart de plus de -30 pas est appliqué au degré d'ouverture du premier détendeur 20, ceci en faisant en sorte que cette consigne soit atteinte en moins de 10 seconde (compte-tenu de la précision du graphe de la figure 2, cet écart n'est pas visible).

Après l'atteinte de ces valeurs de consignes, la première stratégie reprend alors sur la période repérée C. Pour atteindre les valeurs de refroidissement souhaitées pour l'habitacle et la batterie, le compresseur est amené à une vitesse de 6000 tours/minute et le premier détendeur 2 est amené à un pas de commande d'environ 140. Avec ces caractéristiques, la température du flux d'air intérieur traversant l'évaporateur 22 est de 6°C et la température de fluide caloporteur en sortie du refroidisseur 26 est de 21° C, ceci en relation avec la puissance de dissipation dudit refroidisseur établie à environ 2,2 KW.

Lors de la période B, on constate que la température du flux d'air intérieur a certes augmenté de +4°C mais, sans l'invention, en maintenant la première stratégie, elle aurait augmenté de près du double avant de commencer à redescendre, ce qui aurait entrainé fort un ressenti dans l'habitacle.

## Revendications

1. Procédé de contrôle d'une boucle de thermorégulation parcouru par un fluide réfrigérant, ladite boucle comprenant au moins une première et une deuxième branche (2, 4) de circulation du fluide, ledit procédé étant configuré pour faire passer la boucle d'un premier état dans lequel le fluide circule dans l'une seulement desdites branches (2, 4) à un deuxième état dans lequel le fluide circule simultanément dans lesdites branches (2, 4), et réciproquement, procédé comprenant une étape de contrôle d'un écoulement du fluide dans l'une et/ou l'autre des branches (2, 4) selon une première stratégie de contrôle lors d'un fonctionnement dans un mode permanent du premier ou du deuxième état et une étape de modification de l'écoulement du fluide selon une seconde stratégie de contrôle lors d'un passage de l'un des états à un autre des états de sorte à limiter un écart de température lors dudit passage, **caractérisé en ce que** la deuxième stratégie comprend un calcul d'une valeur de consigne par un ajout ou une soustraction d'une valeur de décalage à une valeur délivrée par la première stratégie.

2. Procédé selon la revendication 1 dans lequel la première branche (2) comprend une branche de thermo régulation d'un flux d'air et/ou la deuxième branche (4) comprend une branche de thermo régulation d'une batterie.

3. Procédé selon l'une quelconque des revendications 1 ou 2 dans lequel, en cas de passage d'une alternative du premier état dans lequel le fluide circule seulement dans la première branche (2) au deuxième état, l'étape de modification comprend une étape de fermeture d'un premier détendeur (20) de la première branche (2) et/ou une étape d'accélération d'un compresseur (12) de la boucle, en cas de passage d'une alternative du premier état dans lequel le fluide circule seulement dans la deuxième branche (4) au deuxième état, l'étape de modification comprend une étape de fermeture d'un deuxième détendeur (24) de la deuxième branche (4) et/ou une étape d'accélération du compresseur (12), en cas de passage du deuxième état à la première alternative du premier état, l'étape de modification comprend étape d'ouverture du premier détendeur (20) de la première branche (2) et/ou une étape de ralentissement du compresseur (12), en cas de passage du deuxième état à la deuxième alternative du premier état, l'étape de modification comprend une étape d'ouverture du deuxième détendeur (24) de la deuxième branche (4), et/ou une étape de ralentissement du compresseur (12).

4. Procédé selon la revendication 3 dans lequel ladite étape d'accélération du compresseur (12) est effectuée en accélérant le compresseur (12) d'au moins 20%, voire d'au moins 25%, et/ou ladite étape de ralentissement du compresseur (12) est effectuée en ralentissant le compresseur (12) d'au moins 20%, voire d'au moins 25%.

5. Procédé selon l'une quelconque des revendications 3 ou 4 dans lequel ladite étape de fermeture du premier ou du deuxième détendeur (20, 24) est effectuée en fermant respectivement le premier ou le deuxième détendeur (20, 24) d'au moins 20%, voire d'au moins 30%, et/ou ladite étape d'ouverture du premier ou du deuxième détendeur (20, 24) est effectuée en ouvrant respectivement ledit premier ou ledit deuxième détendeur d'au moins 20%, voire d'au moins 30%.

6. Procédé selon l'une quelconque des revendications 3 à 5 dans lequel la première stratégie comprend la prise en compte de paramètres de contrôle parmi une température d'un flux d'air traversant un évaporateur (22) de la première branche (2), une température d'un autre fluide traversant un refroidisseur (26) de la deuxième branche (4) permettant un échange de chaleur entre ledit autre fluide et le fluide réfrigérant, une température du fluide réfrigérant à l'entrée du compresseur (12) et/ou une pression du fluide réfrigérant à l'entrée et/ou à la sortie du compresseur (12).

7. Procédé selon l'une quelconque des revendications précédentes comprenant une étape d'ouverture ou de fermeture d'une vanne (28, 28') située sur la première branche (2) et/ou la deuxième branche (4) pour déclencher le passage de l'un des états à un autre des états.

8. Procédé selon la revendication 1 dans lequel ladite valeur de décalage est une constante et/ou une valeur dépendant de caractéristiques de la boucle.

9. Procédé selon l'une quelconque des revendications 7 ou 8 dans lequel une durée entre un déclenchement du passage de l'un des états à l'autre des états et une atteinte de la ou des valeurs de consigne issues du calcul relatif à la deuxième stratégie est inférieure à 20 secondes, voire à 10 secondes.

## Patentansprüche

1. Verfahren zur Steuerung eines Thermoregelkreises, der von einem Kältemittel durchströmt wird, wobei der Kreis mindestens einen ersten und einen zweiten Fluidzirkulationszweig (2, 4) umfasst, wobei das Verfahren konfiguriert ist, um den Kreis von einem ersten Zustand, in dem das Fluid nur in einem der genannten Zweige (2, 4) zirkuliert, in einen zweiten Zustand zu überführen, in dem das Fluid gleichzeitig in den genannten Zweigen (2, 4) zirkuliert, und umgekehrt, wobei das Verfahren einen Schritt zur Steuerung eines Fluidstroms in einem und/oder dem anderen der Zweige (2, 4) gemäß einer ersten Steuerstrategie während des Betriebs in einem stationären Modus des ersten oder zweiten Zustands und einen Schritt zur Modifizierung des Fluidstroms gemäß einer zweiten Steuerstrategie während eines Übergangs von einem der Zustände zu einem anderen der Zustände umfasst, um eine Temperaturabweichung während des genannten Übergangs zu begrenzen, **dadurch gekennzeichnet, dass** die zweite Strategie eine Berechnung eines Sollwerts durch Addition oder Subtraktion eines Offsetwerts zu einem von der ersten Strategie gelieferten Wert umfasst.

2. Verfahren nach Anspruch 1, wobei der erste Zweig (2) einen Luftstrom-Thermoregelungszweig und/oder der zweite Zweig (4) einen Batteriethermoregelungszweig umfasst.

3. Verfahren nach einem der Ansprüche 1 oder 2, wobei im Falle eines Übergangs von einer Alternative des ersten Zustands, in dem das Fluid nur im ersten Zweig (2) zirkuliert, in den zweiten Zustand, der Modifizierungsschritt einen Schritt zum Schließen eines ersten Expansionsventils (20) des ersten Zweigs (2) und/oder einen Schritt zur Beschleunigung eines Kompressors (12) des Kreises umfasst, im Falle eines Übergangs von einer Alternative des ersten Zustands, in dem das Fluid nur im zweiten Zweig (4) zirkuliert, in den zweiten Zustand, der Modifizierungsschritt einen Schritt zum Schließen eines zweiten Expansionsventils (24) des zweiten Zweigs (4) und/oder einen Schritt zur Beschleunigung des Kompressors (12) umfasst, im Falle eines Übergangs vom zweiten Zustand zur ersten Alternative des ersten Zustands, der Modifizierungsschritt einen Schritt zum Öffnen des ersten Expansionsventils (20) des ersten Zweigs (2) und/oder einen Schritt zur Verlangsamung des Kompressors (12) umfasst, im Falle eines Übergangs vom zweiten Zustand zur zweiten Alternative des ersten Zustands, der Modifizierungsschritt einen Schritt zum Öffnen des zweiten Expansionsventils (24) des zweiten Zweigs (4) und/oder einen Schritt zur Verlangsamung des Kompressors (12) umfasst.

4. Verfahren nach Anspruch 3, wobei der genannte Beschleunigungsschritt des Kompressors (12) durch Beschleunigung des Kompressors (12) um mindestens 20 %, oder sogar um mindestens 25 % durchgeführt wird, und/oder der genannte Verlangsamungsschritt des Kompressors (12) durch Verlangsamung des Kompressors (12) um mindestens 20 %, oder sogar um mindestens 25 % durchgeführt wird.

5. Verfahren nach einem der Ansprüche 3 oder 4, wobei der genannte Schritt zum Schließen des ersten oder zweiten Expansionsventils (20, 24) durch Schließen des ersten bzw. zweiten Expansionsventils (20, 24) um mindestens 20 %, oder sogar um mindestens 30 % durchgeführt wird, und/oder der genannte Schritt zum Öffnen des ersten oder zweiten Expansionsventils (20, 24) durch Öffnen des genannten ersten bzw. genannten zweiten Expansionsventils um mindestens 20 %, oder sogar um mindestens 30 % durchgeführt wird.

6. Verfahren nach einem der Ansprüche 3 bis 5, wobei die erste Strategie die Berücksichtigung von Steuerparametern umfasst, darunter eine Temperatur eines Luftstroms, der einen Verdampfer (22) des ersten Zweigs (2) durchströmt, eine Temperatur eines anderen Fluids, das einen Kühler (26) des zweiten Zweigs (4) durchströmt, der einen Wärmeaustausch zwischen dem genannten anderen Fluid und dem Kältemittel ermöglicht, eine Temperatur des Kältemittels am Eingang des Kompressors (12) und/oder einen Druck des Kältemittels am Eingang und/oder Ausgang des Kompressors (12).

7. Verfahren nach einem der vorhergehenden Ansprüche, umfassend einen Schritt zum Öffnen oder Schließen eines Ventils (28, 28'), das sich im ersten Zweig (2) und/oder im zweiten Zweig (4) befindet, um den Übergang von einem der Zustände zu einem anderen der Zustände einzuleiten.

8. Verfahren nach Anspruch 1, wobei der genannte Offsetwert eine Konstante und/oder ein Wert ist, der von den Eigenschaften des Kreises abhängt.

9. Verfahren nach einem der Ansprüche 7 oder 8, wobei eine Dauer zwischen einer Einleitung des Übergangs von einem der Zustände zu dem anderen der Zustände und dem Erreichen des oder der Sollwerte, die sich aus der Berechnung bezüglich der zweiten Strategie ergeben, weniger als 20 Sekunden, oder sogar weniger als 10 Sekunden beträgt.

## Claims

1. A method for controlling a thermoregulation loop traversed by a refrigerant fluid, said loop comprising at least a first and a second branch (2, 4) for fluid circulation, said method being configured to switch the loop from a first state in which the fluid circulates in only one of said branches (2, 4) to a second state in which the fluid circulates simultaneously in said branches (2, 4), and vice versa, the method comprising a step of controlling a fluid flow in one and/or the other of the branches (2, 4) according to a first control strategy during operation in a steady mode of the first or second state, and a step of modifying the fluid flow according to a second control strategy during a transition from one of the states to another of the states so as to limit a temperature deviation during said transition, **characterized in that** the second strategy comprises a calculation of a set point value by adding or subtracting an offset value to a value delivered by the first strategy.

2. The method according to claim 1, wherein the first branch (2) comprises an airflow thermoregulation branch and/or the second branch (4) comprises a battery thermoregulation branch.

3. The method according to any one of claims 1 or 2, wherein, in case of a transition from an alternative of the first state in which the fluid circulates only in the first branch (2) to the second state, the modification step comprises a step of closing a first expansion valve (20) of the first branch (2) and/or a step of accelerating a compressor (12) of the loop, in case of a transition from an alternative of the first state in which the fluid circulates only in the second branch (4) to the second state, the modification step comprises a step of closing a second expansion valve (24) of the second branch (4) and/or a step of accelerating the compressor (12), in case of a transition from the second state to the first alternative of the first state, the modification step comprises a step of opening the first expansion valve (20) of the first branch (2) and/or a step of decelerating the compressor (12), in case of a transition from the second state to the second alternative of the first state, the modification step comprises a step of opening the second expansion valve (24) of the second branch (4), and/or a step of decelerating the compressor (12).

4. The method according to claim 3, wherein said compressor (12) acceleration step is performed by accelerating the compressor (12) by at least 20%, or even by at least 25%, and/or said compressor (12) deceleration step is performed by decelerating the compressor (12) by at least 20%, or even by at least 25%.

5. The method according to any one of claims 3 or 4, wherein said step of closing the first or second expansion valve (20, 24) is performed by closing respectively the first or second expansion valve (20, 24) by at least 20%, or even by at least 30%, and/or said step of opening the first or second expansion valve (20, 24) is performed by opening respectively said first or said second expansion valve by at least 20%, or even by at least 30%.

6. The method according to any one of claims 3 to 5, wherein the first strategy comprises taking into account control parameters from among a temperature of an air flow passing through an evaporator (22) of the first branch (2), a temperature of another fluid passing through a cooler (26) of the second branch (4) allowing heat exchange between said another fluid and the refrigerant fluid, a temperature of the refrigerant fluid at the inlet of the compressor (12) and/or a pressure of the refrigerant fluid at the inlet and/or outlet of the compressor (12).

7. The method according to any one of the preceding claims, comprising a step of opening or closing a valve (28, 28') located on the first branch (2) and/or the second branch (4) to initiate the transition from one of the states to another of the states.

8. The method according to claim 1, wherein said offset value is a constant and/or a value depending on characteristics of the loop.

9. The method according to any one of claims 7 or 8, wherein a duration between an initiation of the transition from one of the states to the other of the states and an attainment of the setpoint value(s) resulting from the calculation related to the second strategy is less than 20 seconds, or even less than 10 seconds.
